# EUROPÄISCHE PATENTSCHRIFT

(11) **EP 1 673 743 B1**
(45) Veröffentlichungstag und Bekanntmachung des Hinweises auf die Patenterteilung: **25.06.2008**
(21) Anmeldenummer: 04790180.6
(22) Anmeldetag: 07.10.2004
(51) Int. Cl.: G07F 7/10, G06F 12/06

(54) **ZUGREIFEN AUF DATENELEMENTE IN EINEM TRAGBAREN DATENTRÄGER**
ACCESSING DATA ELEMENTS IN A PORTABLE DATA CARRIER
ACCES A DES ELEMENTS DE DONNEES DANS UN SUPPORT DE DONNEES PORTABLE

(30) Priorität: 10.10.2003 DE 10347828
(43) Veröffentlichungstag der Anmeldung: 28.06.2006
(73) Patentinhaber: Giesecke & Devrient GmbH, 81677 München (DE)
(72) Erfinder: GIBIS, Oliver, 81825 München (DE); SEEMÜLLER, Klemens, 85386 Eching (DE)
(74) Vertreter: Dendorfer, Claus
(86) Internationale Anmeldenummer: PCT/EP2004/011221
(87) Internationale Veröffentlichungsnummer: WO 2005/036486

(56) Entgegenhaltungen:
- WO-A-92/08231
- DE-A- 10 127 179
- US-A- 4 610 000
- US-A- 4 905 200
- US-A- 5 542 081
- US-B1- 6 338 435
- RANKL W., EFFING W.: "Handbuch der Chipkarten" 1999, CARL HANSER VERLAG MÜNCHEN WIEN , MÜNCHEN 240630 , XP002312517 ISBN: 3-446-21115-2 Seite 217, Absatz 5.4 - Seite 219
- MILLER FREEMAN: "How to Architect Embedded Systems for Add-on Software" INTERNET ARTICLE, [Online] September 1999 (1999-09), XP002312430 Gefunden im Internet: URL:http://www.netrino.com/Articles/AddOnS oftware/> [gefunden am 2005-01-03]

## Beschreibung

Die Erfindung betrifft allgemein tragbare Datenträger und spezieller das Zugreifen auf Datenelemente, die in einem tragbaren Datenträger gespeichert sind. Ein tragbarer Datenträger im Sinne des vorliegenden Dokuments kann insbesondere eine Chipkarte *(smart card)* in unterschiedlichen Bauformen oder ein Chipmodul oder eine sonstige ressourcenbeschränkte Vorrichtung sein.

Chipkarten und andere tragbare Datenträger weisen üblicherweise mehrere in unterschiedlichen Technologien ausgestaltete Speicher auf, die auf einem einzigen Halbleiterchip des Datenträgers integriert sind. Ein Festwertspeicher kann beispielsweise als maskenprogrammiertes ROM *(read-only memory* - Nur-Lese-Speicher) ausgestaltet sein. Ein nichtflüchtiger überschreibbarer Speicher ist gegenwärtig meist als EEPROM *(electrically erasable programmable read-only memory*- elektrisch löschbarer, programmierbarer Nur-Lese-Speicher) ausgestaltet; es sind jedoch auch andere Technologien, beispielsweise Flash-EEPROM oder FRAM *(ferroelectric random access memory* - ferroelektrischer Speicher mit wahlfreiem Zugriff) vorgeschlagen worden.

Wegen der erheblichen Ressourcenbeschränkung bei tragbaren Datenträgern muß generell auf eine möglichst sparsame Speichernutzung geachtet werden. Dies betrifft insbesondere den nichtflüchtigen überschreibbaren Speicher, der pro Speicherzelle erheblich mehr Chipfläche als eine Speicherzelle des Festwertspeichers benötigt. Es ist daher wünschenswert, möglichst viele Informationen im Festwertspeicher statt im nichtflüchtigen überschreibbaren Speicher unterzubringen. Allerdings muß der Inhalt des Festwertspeichers schon bei der Chipherstellung endgültig festgelegt werden, während der nichtflüchtige überschreibbare Speicher erst bei der Initialisierung oder Personalisierung des Datenträgers erstmalig beschrieben wird. Aus Gründen der Flexibilität ist daher wünschenswert, möglichst weitgehend den nichtflüchtigen überschreibbaren Speicher zu benutzen.

Offensichtlich kann der Festwertspeicher sowieso nicht für Datenelemente benutzt werden, die für den einzelnen Datenträger individuell festgelegt werden. Auch in diesem Fall stellen sich jedoch die gerade genannten Probleme im Hinblick auf Verwaltungsinformationen, die zum Zugriff auf solche Datenelemente erforderlich sind. Derartige Verwaltungsinformationen können beispielsweise ein Kennzeichen (*tag*) umfassen, das wie ein Name zur Identifikation des Datenelements dient. Ferner können die Verwaltungsinformationen den Speicherort des Datenelements z.B. durch eine Startadresse und eine Länge des durch das Datenelement belegten Speicherbereichs angeben.

Besonders wichtig ist die Speicherplatz sparende und gleichzeitig flexible Organisation von Verwaltungsinformationen bei Chipkarten, die mehrere unterschiedliche, aber verwandte Anwendungsprogramme enthalten. Dies können beispielsweise Anwendungsprogramme zur Implementierung einer Kreditkartenfunktionalität für unterschiedliche Kreditkartenfirmen sein. Für solche Einsatzzwecke geeignete Datenträger können z.B. der Spezifikation *EMV 2000 Integrated Circuit Card Specification for Payment Systems,* Version 4.0, Dezember 2000, entsprechen, die von *EMVCo, LLC*, Purchase, New York, USA, herausgegeben wurde und im Internet unter *http:*//*www.emvco.com* verfügbar ist.

Bei Karten mit mehreren ähnlichen, aber nicht identischen Anwendungsprogrammen müssen wegen der bestehenden Unterschiede für jedes Anwendungsprogramm eigene Verwaltungsinformationen vorliegen. Andererseits wäre es wünschenswert, die Gemeinsamkeiten zwischen den Anwendungsprogrammen auszunutzen, um bei möglichst weitgehender Flexibilität Speicherplatz zu sparen.

US-Patent 6,216,014 offenbart ein SIM *(subscriber identity module -* Teilnehmeridentitätsmodul) für ein Mobilkommunikationssystem, das Datenelemente für mehrere Anwendungsprogramme aufweist. Das SIM verwaltet mehrere Zugriffssteuerungssätze derart, daß die Anwendungsprogramme unterschiedliche Rechte zum Zugriff auf die Datenelemente haben.

US-Patent 6,296,191 zeigt einen tragbaren Datenträger, der zur Speicherung von Daten für mehrere externe Anwendungsprogramme vorgesehen ist. Den Datenelementen sind unterschiedliche Sicherheitseigenschaften und Zugriffsbedingungen zugeordnet. Der Datenträger weist mehrere von den jeweiligen Anwendungsprogrammen unabhängige Speicherbereiche auf, in denen Datenelemente mit gleichen Zugriffsbedingungen gespeichert werden.

US-Patent 6,338,435 offenbart ein Patchsystem für Chipkarten, das von einer Chipkarte ausgeht, in deren Festwertspeicher sich eine Managementdatei befindet, die insbesondere eine Vektor-Tabelle mit Startadressen der in dem Festwertspeicher abgelegten Programme sein kann. In einem Schreib/Lesespeicher ist desweiteren ein Dateiindikator angelegt, der anfänglich auf die Managementdatei im Festwertspeicher verweist. Beim Einbringen eines Patches in die Chipkarte wird im Schreib/Lesespeicher eine neue Managementdatei angelegt, die grundsätzlich der im Festwertspeicher vorhandenen Managementdatei entspricht, jedoch von dieser abweichend Einträge auf durch den Patch eingebrachte Programmelemente enthält. Zugleich mit dem Anlegen der neuen Managementdatei wird der Dateiindikator auf diese eingestellt. Die bekannte Lösung erlaubt ein jederzeitiges flexibles Einbringen von Patches in eine Chipkarte. Die Lösung sieht allerdings keine Maßnahmen für einen sparsamen Umgang mit vorhandenem Speicherplatz vor.

Die Erfindung hat die Aufgabe, die oben genannten Probleme ganz oder zum Teil zu lösen und eine Technik zum Zugreifen auf Datenelemente in einem tragbaren Datenträger bereitzustellen, die bei hoher Flexibilität möglichst speichereffizient ist. In bevorzugten Ausgestaltungen soll diese Aufgabe insbesondere für Datenträger gelöst werden, die mehrere unterschiedliche Anwendungsprogramme aufweisen.

Erfindungsgemäß wird diese Aufgabe ganz oder zum Teil gelöst durch ein Verfahren zum Zugreifen auf Datenelemente gemäß Anspruch 1, ein Computerprogrammprodukt gemäß Anspruch 10 und einen tragbaren Datenträger gemäß Anspruch 12. Die abhängigen Ansprüche betreffen bevorzugte Ausführungsformen der Erfindung.

Die Erfindung beruht auf der Grundidee, Verwaltungsinformationen, die die im Datenträger gespeicherten Datenelemente betreffen, teils in mindestens einer Grundtabelle im Festwertspeicher und teils als Ergänzungsdaten im nichtflüchtigen überschreibbaren Speicher zu speichern. Wenn für ein vorgegebenes Kennzeichen in den heranzuziehenden Ergänzungsdaten ein dem Kennzeichen zugeordneter Eintrag existiert, wird auf das Datenelement gemäß diesem Eintrag zugegriffen. Ist kein derartiger Eintrag vorhanden, so wird gemäß einem dem Kennzeichen zugeordneten Eintrag in der Grundtabelle auf das Datenelement zugegriffen. Kurz gesagt hat ein in den heranzuziehenden Ergänzungsdaten eventuell existierender Eintrag also "Vorrang" vor einem entsprechenden Eintrag in der Grundtabelle.

Die Erfindung vereint auf vorteilhafte Weise Flexibilität und gute Chipflächennutzung. Einerseits wird ein potentiell erheblicher Teil der benötigten Verwaltungsinformationen - nämlich die Grundtabelle - in dem nur wenig Chipfläche benötigenden Festwertspeicher angelegt. Andererseits können die in der Grundtabelle angegebenen Informationen im Ergebnis "überschrieben" werden, indem - z.B. bei der Initialisierung oder Personalisierung oder während des Betriebs des Datenträgers - Einträge, die den entsprechenden Kennzeichen zugeordnet sind, als Ergänzungsdaten in den nichtflüchtigen überschreibbaren Speicher geschrieben werden.

Das Grundprinzip des "Vorrangs" von Einträgen der Ergänzungsdaten vor Einträgen in der Grundtabelle kann mit Speicherzugriffen in unterschiedlicher Reihenfolge implementiert werden. So kann in manchen Ausführungsformen vorgesehen sein, zunächst die anzuwendenden Ergänzungsdaten zu durchsuchen. Wenn dabei schon ein dem Kennzeichen entsprechender Eintrag gefunden wird, ist kein Zugriff auf die Grundtabelle mehr erforderlich. In anderen Ausgestaltungen kann dagegen zunächst die Grundtabelle durchsucht werden. Der dort gefundene Speicherort für das dem Kennzeichen zugeordnete Datenelement - und gegebenenfalls weitere Verwaltungsinformationen - wird/werden überschrieben, falls in einem weiteren Schritt ein dem Kennzeichen zugeordneter Eintrag in den Ergänzungsdaten gefunden wird.

In manchen Ausgestaltungen kann vorgesehen sein, daß zu jedem Eintrag in den Ergänzungsdaten ein entsprechender Eintrag in der Grundtabelle vorhanden sein muß. In anderen Ausgestaltungen besteht diese Einschränkung jedoch nicht.

Erfindungsgemäß sind die Einträge in der Grundtabelle und in den Ergänzungsdaten je einem Kennzeichen (*tag*) zugeordnet. Im Hinblick auf die Grundtabelle heißt dies in der Regel, daß jeder Eintrag das betreffende Kennzeichen enthält, und daß bei der Suche nach einem Eintrag ein Vergleich des in diesem Eintrag enthaltenen Kennzeichens mit einem vorgegebenen Kennzeichen erfolgt. Im Hinblick auf die Ergänzungsdaten besteht in bevorzugten Ausgestaltungen ebenfalls eine direkte Zuordnung zwischen Einträgen und Kennzeichen, wie gerade für die Grundtabelle beschrieben. Es sind jedoch auch Ausgestaltungen möglich, bei denen die Einträge der Ergänzungsdaten den jeweiligen Kennzeichen nur mittelbar zugeordnet sind. Beispielsweise kann jeder Eintrag der Grundtabelle einen Identifikator enthalten, der seinerseits zum Auffinden eines entsprechenden Eintrags in den Ergänzungsdaten dient. Obwohl in diesem Fall der aufgefundene Eintrag in den Ergänzungsdaten das Kennzeichen nicht unmittelbar enthält, wird er dennoch als dem Kennzeichen zugeordnet angesehen.

Erfindungsgemäß geben die Einträge in der Grundtabelle je einen Speicherort im nichtflüchtigen überschreibbaren Speicher für die jeweiligen Datenelemente an. In bevorzugten Ausgestaltungen trifft dies auch für die Einträge in den Ergänzungsdaten zu. Die Grundtabelle und die Ergänzungsdaten enthalten dann ausschließlich Verwaltungsinformationen, und die eigentlichen Datenelemente sind davon getrennt - vorzugsweise im nichtflüchtigen überschreibbaren Speicher - angelegt. Es sind jedoch auch Ausführungsformen möglich, bei denen die Ergänzungsdaten zumindest für manche Einträge nicht nur einen Speicherort angeben, sondern das betreffende Datenelement selbst enthalten. In derartigen Ausgestaltungen ist es besonders vorteilhaft, die Ergänzungsdaten als verkettete Liste mit Einträgen unterschiedlicher Längen zu implementieren.

Die Ergänzungsdaten sind in bevorzugten Ausgestaltungen in Bereiche unterteilt. In Abhängigkeit von vorgegebenen Bedingungen - z.B. der Identität des Benutzers oder einer Autorisierungsstufe oder einem gerade ausgeführten Anwendungsprogramm - werden dann beim Zugriff auf ein Datenelement nur die Ergänzungsdaten in einem oder einigen der vorhandenen Ergänzungsdatenbereiche herangezogen, während andere Ergänzungsdaten ignoriert werden.

Besonders vorteilhaft ist der Einsatz der Erfindung bei tragbaren Datenträgern, die zum Ausführen mehrerer Anwendungsprogramme eingerichtet sind. Die Anwendungsprogramme solcher Datenträger benötigen in vielen Fällen gleichartige, aber allenfalls zum Teil identische Datenelemente. Es ist dann eine erhebliche Speicherplatzeinsparung möglich, indem eine einzige Grundtabelle für alle Anwendungsprogramme verwendet wird. Diese Grundtabelle enthält vorzugsweise Voreinstellungen für eines der Anwendungsprogramme. Abweichungen von diesen Voreinstellungen werden durch die Ergänzungsdaten definiert. Dabei kann jedem weiteren Anwendungsprogramm ein eigener Ergänzungsdatensatz oder ein spezifischer Bereich der Ergänzungsdaten zugeordnet sein. Beim Zugriff auf ein Datenelement für jedes Anwendungsprogramm wird dann vorzugsweise nur der jeweils entsprechende Ergänzungsdatensatz bzw. der entsprechende Ergänzungsdatenbereich herangezogen. Zur Erhöhung der Flexibilität auch für dasjenige Anwendungsprogramm, für das die Grundtabelle vorgesehen ist, kann in manchen Ausführungsformen auch für dieses Anwendungsprogramm ein Ergänzungsdatenbereich im nichtflüchtigen beschreibbaren Speicher angelegt sein.

Besonders vorteilhaft sind Ausgestaltungen, bei denen manche Einträge der Ergänzungsdaten ferner Zusatzinformationen angeben. Solche Zusatzinformationen können beispielsweise Angaben zu Zugriffsrechten auf das jeweilige Datenelement sein. Insbesondere ist die Speicherung von Zusatzinformationen in den Ergänzungsdaten dann vorteilhaft, wenn die Zusatzinformationen nur für relativ wenige Datenelemente benötigt werden. Die für diese Informationen sonst benötigte Spalte in der Grundtabelle kann dann entfallen. Wenn z.B. ein Attribut "externer Zugriff auf Datenelement gestattet" nur für wenige Datenelemente gesetzt ist, kann es im Ergebnis Speicherplatz einsparen, dieses Attribut in den Einträgen der Grundtabelle nicht aufzuführen und stattdessen für die wenigen Datenelemente, auf die ein externer Zugriff möglich sein soll, einen entsprechenden Eintrag in die Ergänzungsdaten aufzunehmen. Eine solche Ausgestaltung ist insbesondere dann vorteilhaft, wenn die Einträge in den Ergänzungsdaten nur die zu verändernden oder zu ergänzenden Datenfelder enthalten.

Das erfindungsgemäße Computerprogrammprodukt weist Informationen auf, die mindestens eine Grundtabelle sowie die Ergänzungsdaten definieren. In bevorzugten Ausgestaltungen enthält das Computerprogrammprodukt ferner Programmbefehle, um das erfindungsgemäße Zugriffsverfahren zu implementieren. Ein derartiges Computerprogrammprodukt kann ein körperliches Medium sein, beispielsweise ein Halbleiterspeicher oder eine Diskette oder eine CD-ROM. Das Computerprogrammprodukt kann jedoch auch ein nicht-körperliches Medium sein, beispielsweise ein über ein Computernetzwerk übermitteltes Signal. Insbesondere kann das Computerprogrammprodukt bei der Initialisierung oder Personalisierung oder während des Betriebs des tragbaren Datenträgers eingesetzt werden.

Der erfindungsgemäße Datenträger enthält mindestens eine Grundtabelle sowie Ergänzungsdaten. In bevorzugten Ausgestaltungen ist der Datenträger ferner zur Ausführung des erfindungsgemäßen Zugriffsverfahrens eingerichtet.

In bevorzugten Ausgestaltungen weist/weisen der Datenträger und/oder das Computerprogrammprodukt Merkmale auf, die den gerade beschriebenen und/oder den in den abhängigen Verfahrensansprüchen genannten Merkmalen entsprechen.

Weitere Merkmale, Vorteile und Aufgaben der Erfindung gehen aus der folgenden genauen Beschreibung mehrerer Ausführungsbeispiele und Ausführungsalternativen hervor. Es wird auf die schematischen Zeichnungen verwiesen, in denen zeigen:
Fig.1 ein Blockdiagramm mit Funktionseinheiten eines tragbaren Datenträgers nach einem Ausführungsbeispiel der Erfindung,
Fig. 2 ein Flußdiagramm eines ersten Ausführungsbeispiels eines erfindungsgemäßen Verfahrens, und
Fig. 3 ein Flußdiagramm eines zweiten Ausführungsbeispiels eines erfindungsgemäßen Verfahrens.

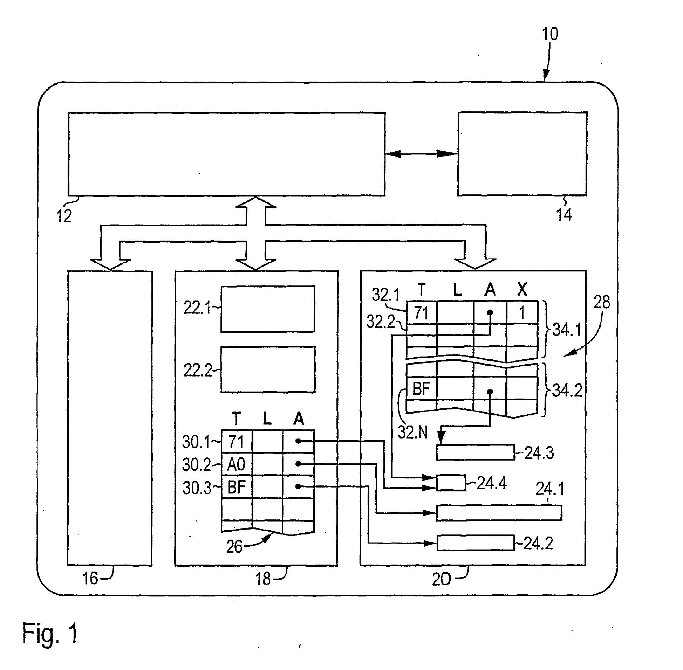

Der in Fig.1 gezeigte Datenträger 10 ist im vorliegenden Ausführungsbeispiel als Chipkarte gemäß der bereits erwähnten EMV-2000-Spezifikation ausgestaltet. Der Datenträger 10 weist auf einem einzigen Halbleiterchip einen Prozessorkern 12 und eine Schnittstellenschaltung 14 zur kontaktlosen oder kontaktgebundenen Kommunikation auf. Ferner enthält der Datenträger mehrere in unterschiedlichen Technologien ausgestaltete Speicher, nämlich einen Arbeitsspeicher 16, einen Festwertspeicher 18 und einen nichtflüchtigen überschreibbaren Speicher 20. Der Arbeitsspeicher 16 ist als RAM, der Festwertspeicher 18 als maskenprogrammiertes ROM und der nichtflüchtige überschreibbare Speicher als elektrisch lösch- und programmierbares EEPROM ausgestaltet.

In an sich bekannter Weise weist der Datenträger 10 ein Betriebssystem (in Fig.1 nicht gezeigt) auf, das sich hauptsächlich im Festwertspeicher 18 und zum Teil auch im nichtflüchtigen überschreibbaren Speicher 20 befindet. Unter Steuerung des Betriebssystems vermag der Datenträger 10 mehrere Anwendungsprogramme 22.1, 22.2 auszuführen, die im folgenden zusammenfassend mit 22.x bezeichnet werden. Im vorliegenden Ausführungsbeispiel stellen die Anwendungsprogramme 22.x eine Kreditkartenfunktionalität für unterschiedliche Kreditkartenfirmen bereit. Die von den Anwendungsprogrammen 22.x ausgeführten Funktionen sind zwar ähnlich, aber im Detail doch unterschiedlich.

Die Anwendungsprogramme 22.x greifen auf eine Vielzahl von Datenelementen zu, die im nichtflüchtigen überschreibbaren Speicher 20 enthalten sind. In Fig.1 sind beispielhaft vier Datenelemente 24.1, 24.2, 24.3, 24.4 gezeigt, die im folgenden auch zusammenfassend mit 24.x bezeichnet werden. Das Datenelement 24.1 kann z.B. der Name des Inhabers des Datenträgers 10 sein, das Datenelement 24.2 z.B. der von dem ersten Anwendungsprogramm 22.1 zu verwendende Höchstbetrag für eine Kreditkartenzahlung, das Datenelement 24.3 z.B. der von dem zweiten Anwendungsprogramm 22.2 zu verwendende Höchstbeträg für eine Kreditkartenzahlung, und das Datenelement 24.4 z.B. ein Fehlbedienungszähler des ersten Anwendungsprogramms 22.1. Die Datenelemente 24.x befinden sich in einem an sich bekannten Dateisystem, das in Fig.1 aus Gründen der Übersichtlichkeit nicht gezeigt ist.

Als Verwaltungsinformationen zum Zugriff auf die Datenelemente 24.x weist der Datenträger 10 eine Grundtabelle 26 im Festwertspeicher 18 und Ergänzungsdaten 28 im nichtflüchtigen überschreibbaren Speicher 20 auf. Die Grundtabelle 26 enthält eine Vielzahl von Einträgen 30.1, 30.2, 30.3, ..., die im folgenden zusammenfassend mit 30.x bezeichnet werden. Jeder Eintrag 30.x der Grundtabelle 26 enthält ein Kennzeichen T *(tag)* des Eintrags 30.x sowie eine Angabe des Speicherorts desjenigen Datenelements 24.x, auf das sich der Eintrag 30.x bezieht. Die Angabe des Speicherorts enthält im hier beschriebenen Ausführungsbeispiel die Länge L und die Startadresse A des jeweiligen Datenelements 24.x im nichtflüchtigen überschreibbaren Speicher 20.

Die Ergänzungsdaten 28 sind im vorliegenden Ausführungsbeispiel ebenfalls als Tabelle mit einer Vielzahl von Einträgen 32.1, 32.2, ..., 32.N, ... organisiert, die im folgenden zusammenfassend mit 32.x bezeichnet werden. In Ausführungsalternativen können die Ergänzungsdaten 28 jedoch auch in anderen Datenstrukturen, beispielsweise als verkettete Liste der Einträge 32.x, angeordnet sein; möglich ist insbesondere auch eine Anordnung in einzelnen abgeschlossenen Datensätzen, die jeweils einem Anwendungsprogramm 22.x zugeordnet sind. Neben Feldern für ein Kennzeichen T, eine Längenangabe L und eine Startadresse A weist jeder Eintrag 32.x Zusatzinformationen X auf, deren Funktion hier beispielhaft anhand eines Attributs "externer Zugriff auf Datenelement möglich" erläutert werden soll: In Ausführungsalternativen können die Einträge 32.x eine andere Struktur haben. Insbesondere können die Einträge 32.x hinsichtlich der in ihnen enthaltenen Datenfelder variabel sein, so daß z.B. jeder Eintrag 32.x eine unterschiedliche Anzahl und Auswahl von Datenfeldern aufweisen kann.

Die Ergänzungsdaten 28 sind in mehrere Bereiche 34.1, 34.2 untergliedert, die je einem der Anwendungsprogramme 22.1, 22.2 zugeordnet sind; die Gliederung kann durch Anordnung der Bereiche 34.x in einzelnen Datensätzen realisiert sein. Entsprechend wird zum Beispiel bei einem von dem zweiten Anwendungsprogramm 22.2 angeforderten Zugriff auf ein Datenelement 24.x nur der zweite Bereich 34.2 der Ergänzungsdaten 28 ausgewertet, während die Einträge im ersten Bereich 34.1 ignoriert werden.

Das Grundprinzip der hier beschriebenen Technik zum Zugreifen auf die Datenelemente 24.x besteht darin, daß eventuell vorhandene Einträge 32.x in dem jeweils heranzuziehenden Bereich 34.x der Ergänzungsdaten 28 Vorrang vor entsprechenden Einträgen 30.x in der Grundtabelle 26 haben. Wenn beispielsweise das zweite Anwendungsprogramm 22.2 auf den Höchstbetrag mit dem Kennzeichen "BF" zugreifen möchte, erfolgt dieser Zugriff auf das Datenelement 24.3, weil der für das zweite Anwendungsprogramm 22.2 heranzuziehende Bereich 34.2 der Ergänzungsdaten 28 den Eintrag 32.N mit dem Kennzeichen "BF" und dem Speicherort des Datenelements 24.3 enthält. Der in der Grundtabelle 26 enthaltene Eintrag 30.3 mit dem Kennzeichen "BF" wird in diesem Fall nicht berücksichtigt.

Liegt dagegen in dem heranzuziehenden Bereich 34.x der Ergänzungsdaten 28 kein Eintrag 32.x mit dem gewünschten Kennzeichen vor, so wird der entsprechende Eintrag 30.x der Grundtabelle 26 verwendet. Dies ist beispielsweise bei einem Zugriff des ersten Anwendungsprogramms 22.1 auf den mit dem Kennzeichen "BF" bezeichneten Höchstbetrag der Fall; hier erfolgt der Zugriff, wie im Eintrag 30.3 der Grundtabelle angegeben, auf das Datenelement 24.2.

Wenn für ein vorgegebenes Kennzeichen kein Eintrag in den Ergänzungsdaten 28 vorhanden ist, dann greifen alle Anwendungsprogramme 22.x auf denselben Speicherort im nichtflüchtigen überschreibbaren Speicher 20 zu. So erfolgt beispielsweise für das Kennzeichen "A0" der Zugriff für alle Anwendungsprogramme 22.x gemäß dem Eintrag 30.2 in der Grundtabelle 26 auf das Datenelement 24.1.

Fig.1 zeigt ferner, daß Einträge 32.x der Ergänzungsdaten 28 auch verwendet werden können, um Zusatzinformationen X für Datenelemente 24.x anzugeben. So wird beispielsweise durch den Eintrag 32.1 der Ergänzungsdaten 28 das Datenelement 24.4, soweit das erste Anwendungsprogramm 22.1 betroffen ist, als extern auslesbares Datenelement deklariert. Der in dem Eintrag 32.1 angegebene Speicherort des Datenelements 24.4 unterscheidet sich im vorliegenden Beispiel nicht von dem Speicherort im entsprechenden Eintrag 30.1 der Grundtabelle 26.

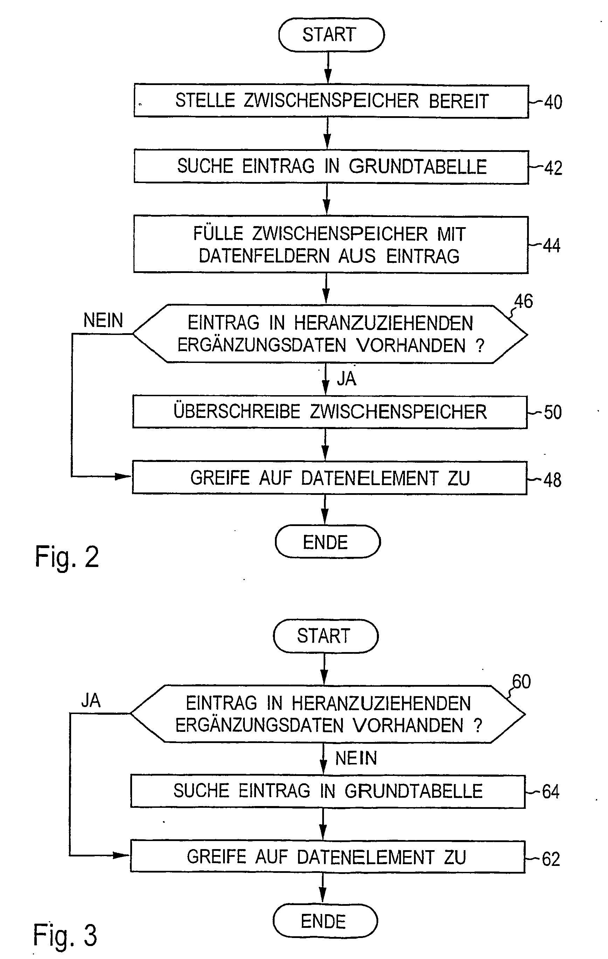

Das in Fig. 2 gezeigte Ausführungsbeispiel eines Zugriffsverfahrens wird von einer Routine des Betriebssystems des Datenträgers 10 ausgeführt. Das Verfahren wird begonnen, wenn ein Anwendungsprogramm diese Betriebssystemroutine unter Angabe des gewünschten Kennzeichens T aufruft. In Schritt 40 wird zunächst ein Zwischenspeicher mit einer vordefinierten Struktur bereitgestellt. In dem einfachen Ausführungsbeispiel von Fig.1 enthält diese Struktur nur je ein Längen- und ein Startadressenfeld, während sie in komplexeren Ausgestaltungen weitere Informationsfelder, die gegebenenfalls auch als zusätzliche Spalten in der Grundtabelle 26 enthalten sein können, aufweisen kann.

In Schritt 42 wird der dem Kennzeichen T entsprechende Eintrag 30.x in der Grundtabelle 26 gesucht. Der in Schritt 40 bereitgestellte Zwischenspeicher wird in Schritt 44 mit dem in Eintrag 30.x enthaltenen Speicherort - und gegebenenfalls weiteren Informationen - gefüllt.

In Schritt 46 wird ermittelt, ob in dem für das aufrufende Anwendungsprogramm 22.x heranzuziehenden Bereich 34.x der Ergänzungsdaten 28 ein Eintrag 32.x für das Kennzeichen T enthalten ist. Ist dies nicht der Fall, so erfolgt in Schritt 48 ein Zugriff auf das gewünschte Datenelement 24.x gemäß dem Eintrag 30.x der Grundtabelle 26. Wenn jedoch in Schritt 46 ein entsprechender Eintrag 32.x in den heranzuziehenden Ergänzungsdaten 28 gefunden wird, wird der Inhalt des Zwischenspeichers in Schritt 50 mit den Informationen aus diesem Eintrag 32.x überschrieben. Je nach der Ausgestaltung der Einträge 32.x in den Ergänzungsdaten 28 können hierbei alle Datenfelder des Zwischenspeichers oder nur einige Datenfelder überschrieben werden. Unter Verwendung der nun im Zwischenspeicher enthaltenen Informationen wird dann in Schritt 48 auf das entsprechende Datenelement 24.x zugegriffen.

Fig. 3 zeigt eine Ausführungsalternative des Zugriffsverfahrens, bei dem in Schritt 60 zunächst der heranzuziehende Bereich 34.x der Ergänzungsdaten 28 nach einem Eintrag 32.x mit dem gewünschten Kennzeichen T durchsucht wird. Wird ein passender Eintrag gefunden, so erfolgt in Schritt 62 unmittelbar der Zugriff auf das im Eintrag 32.x angegebene Datenelement 24.x. Andernfalls wird in Schritt 64 die Grundtabelle 26 nach einem Eintrag 30.x mit dem gewünschten Kennzeichen T durchsucht. Der Zugriff in Schritt 62 auf das Datenelement 24.x erfolgt dann gemäß dem in dem Eintrag 30.x der Grundtabelle 26 angegebenen Speicherort.

Das Verfahren gemäß Fig. 3 eignet sich besonders dann, wenn die Einträge 32.x der Ergänzungsdaten 28 stets alle Datenfelder der Grundtabelle 26 - oder sogar zusätzliche Datenfelder - aufweisen. Bei Ausgestaltungen, in denen die Einträge 32.x der Ergänzungsdaten 28 nur einzelne Datenfelder der Einträge 30.x in der Grundtabelle 26 überschreiben, ist das Verfahren gemäß Fig. 2 in der Regel vorteilhafter.

## Patentansprüche

1. Verfahren zum Zugreifen auf ein Datenelement (24.x) in einem tragbaren Datenträger (10), der einen Prozessorkern (12), einen Festwertspeicher (18) und einen nichtflüchtigen überschreibbaren Speicher (20) aufweist, und bei dem
- der Festwertspeicher (18) mindestens eine Grundtabelle (26) mit einer Mehrzahl von Einträgen (30.x) aufweist, von denen jeder mindestens einem Kennzeichen (T) zugeordnet ist und einen Speicherort (L, A) eines durch dieses Kennzeichen (T) bezeichneten Datenelements (24.x) im nichtflüchtigen überschreibbaren Speicher (20) angibt, und
- der nichtflüchtige überschreibbare Speicher (20) Ergänzungsdaten (28) mit mindestens einem Eintrag (32.x) aufweist, der mindestens einem Kennzeichen (T) zugeordnet ist und der Informationen (L, A, X) über ein durch dieses Kennzeichen (T) bezeichnetes Datenelement (24.x) angibt,
mit den Schritten:
- Erhalten eines Kennzeichens (T) des Datenelements (24.x), auf das zugegriffen werden soll,
- Zugreifen auf das Datenelement (24.x) gemäß einem dem Kennzeichen (T) zugeordneten Eintrag (32.x) in den heranzuziehenden Ergänzungsdaten (28), sofern ermittelt wurde, daß ein solcher Eintrag (32.x) vorhanden ist, und sonst gemäß einem dem Kennzeichen (T) zugeordneten Eintrag (30.x) in der Grundtabelle (26).

2. Verfahren nach Anspruch 1, **dadurch gekennzeichnet, daß** der tragbare Datenträger (10) zum Ausführen mehrerer Anwendungsprogramme (22.x) eingerichtet ist, wobei für alle Anwendungsprogramme (22.x) eine einzige Grundtabelle (26) und ferner für mindestens eines der Anwendungsprogramme (22.x) mindestens ein für dieses Anwendungsprogramm (22.x) spezifischer Bereich (34.x) der Ergänzungsdaten (28) vorgesehen ist.

3. Verfahren nach Anspruch 2, **dadurch gekennzeichnet, daß** die Anwendungsprogramme (22.x) auf gleichartige, aber allenfalls zum Teil identische Datenelemente (24.x) zugreifen.

4. Verfahren nach Anspruch 2 oder Anspruch 3, **dadurch gekennzeichnet, daß** die Grundtabelle (26) Voreinstellungen für eines der Anwendungsprogramme (22.x) enthält, und daß für jedes weitere Anwendungsprogramm (22.x) je ein Bereich (34.x) der Ergänzungsdaten (28) mit Einträgen (32.x) für Datenelemente (24.x) vorgesehen ist, die von diesen Voreinstellungen abweichen.

5. Verfahren nach einem der Ansprüche 1 bis 4, **dadurch gekennzeichnet, daß** die in jedem Eintrag (32.x) der Ergänzungsdaten (28) gespeicherten Informationen (L, A, X) über das durch das Kennzeichnen (T) bezeichnete Datenelement (24.x) einen Speicherort (L, A) im nichtflüchtigen überschreibbaren Speicher (20) für das Datenelement (24.x) angeben.

6. Verfahren nach Anspruch 5, **dadurch gekennzeichnet, daß** die folgenden Schritte ausgeführt werden:
- Suchen des dem Kennzeichen (T) zugeordneten Eintrags (30.x) in der Grundtabelle (26),
- Zwischenspeichern des in diesem Eintrag (30.x) angegebenen Speicherorts (L, A),
- falls ein dem Kennzeichen (T) zugeordneter Eintrag (32.x) in den heranzuziehenden Ergänzungsdaten (28) vorhanden ist, dann Ersetzen des zwischengespeicherten Speicherorts (L, A) durch den in diesem Eintrag (32.x) angegebenen Speicherort (L, A), und
- Zugreifen auf das Datenelement (24.x) an dem Speicherort (L, A).

7. Verfahren nach einem der Ansprüche 1 bis 5, **dadurch gekennzeichnet, daß** die folgenden Schritte ausgeführt werden:
- Ermitteln, ob ein dem Kennzeichen (T) zugeordneter Eintrag (32.x) in den heranzuziehenden Ergänzungsdaten (28) enthalten ist,
- falls dies der Fall ist, dann Zugreifen auf das Datenelement (24.x) gemäß diesem Eintrag (32.x),
- andernfalls, Suchen des dem Kennzeichen (T) zugeordneten Eintrags (30.x) in der Grundtabelle (26) und Zugreifen auf das Datenelement (24.x) an dem in dem Eintrag (30.x) in der Grundtabelle (26) angegebenen Speicherort (L, A).

8. Verfahren nach einem der Ansprüche 1 bis 7, **dadurch gekennzeichnet, daß** zumindest manche Einträge (32.x) der Ergänzungsdaten (28) ferner Zusatzinformationen (X) angeben.

9. Verfahren nach einem der Ansprüche 1 bis 8, **dadurch gekennzeichnet, daß** der Festwertspeicher (18) ein ROM ist, und/oder daß der nichtflüchtige überschreibbare Speicher (20) ein EEPROM ist.

10. Computerprogrammprodukt, das Daten zur Definition mindestens einer Grundtabelle (26) und zur Definition von Ergänzungsdaten (28) enthält, wobei die mindestens eine Grundtabelle (26) und die Ergänzungsdaten (28) zur Verwendung in einem Verfahren gemäß einem der Ansprüche 1 bis 9 vorgesehen sind.

11. Computerprogrammprodukt nach Anspruch 10, **dadurch gekennzeichnet, daß** das Computerprogrammprodukt ferner Programmbefehle aufweist, die einen Prozessorkern (12) eines tragbaren Datenträgers (10) zur Ausführung eines Verfahrens nach einem der Ansprüche 1 bis 9 veranlassen.

12. Tragbarer Datenträger (10), insbesondere Chipkarte oder Chipmodul, der einen Prozessorkern (12), einen Festwertspeicher (18) und einen nichtflüchtigen überschreibbaren Speicher (20) aufweist, wobei der Festwertspeicher (18) mindestens eine Grundtabelle (26) mit einer Mehrzahl von Einträgen (30.x) aufweist, von denen jeder mindestens einem Kennzeichen (T) zugeordnet ist und einen Speicherort (L, A) eines durch dieses Kennzeichen (T) bezeichneten Datenelements (24.x) im nichtflüchtigen überschreibbaren Speicher (20) angibt, und der nichtflüchtige überschreibbare Speicher (20) Ergänzungsdaten (28) mit mindestens einem Eintrag (32.x) aufweist, der mindestens einem Kennzeichen (T) zugeordnet ist und der Informationen (L, A, X) über ein durch dieses Kennzeichen (T) bezeichnetes Datenelement (24.x) angibt, **dadurch gekennzeichnet, daß** der Datenträger (10) dazu eingerichtet ist, ein Verfahren nach einem der Ansprüche 1 bis 9 auszuführen.

## Claims

1. A method of accessing a data element (24.x) in a portable data carrier (10), which comprises a processor core (12), a permanent memory (18) and a non-volatile, rewritable memory (20), and in which
- the permanent memory (18) comprises at least one basic table (26) with a plurality of entries (30.x), each of which is assigned to at least one tag (T) and denotes a storage location (L, A) of a data element (24.x) designated by this tag (T) in the non-volatile, rewritable memory (20), and
- the non-volatile, rewritable memory (20) comprises supplementary data (28) with at least one entry (32.x), which is assigned to at least one tag (T) and which denotes information (L, A, X) about a data element (24.x) designated by this tag (T),
having the steps of:
- obtaining a tag (T) of the data element (24.x) which is to be accessed,
- accessing the data element (24.x) according to an entry (32.x), assigned to the tag (T), in the supplementary data (28) to be used, provided that it has been determined that such an entry (32.x) is present, and otherwise according to an entry (30.x), assigned to the tag (T), in the basic table (26).

2. A method according to claim 1, **characterised in that** the portable data carrier (10) is set up to execute a plurality of application programs (22.x), provision being made of a single basic table (26) for all the application programs (22.x) and additionally, for at least one of the application programs (22.x), of at least one area (34.x) of the supplementary data (28) specific to said application program (22.x).

3. A method according to claim 2, **characterised in that** the application programs (22.x) access similar, but at most in part identical data elements (24.x).

4. A method according to claim 2 or claim 3, **characterised in that** the basic table (26) contains defaults for one of the application programs (22.x), and **in that** for every further application program (22.x) in each case an area (34.x) of the supplementary data (28) is provided with entries (32.x) for data elements (24.x) which deviate from these defaults.

5. A method according to one of claims 1 to 4, **characterised in that** the information (L, A, X), stored in each entry (32.x) of the supplementary data (28), about the data element (24.x) designated by the tag (T) denotes a storage location (L, A) in the non-volatile, rewritable memory (20) for the data element (24.x).

6. A method according to claim 5, **characterised in that** the following steps are executed:
- searching for the entry (30.x) in the basic table (26) assigned to the tag (T),
- buffering the storage location (L, A) denoted in this entry (30.x),
- if an entry (32.x) assigned to the tag (T) is present in the supplementary data (28) to be used, then replacing the buffered storage location (L, A) by the storage location (L, A) denoted in this entry (32.x), and
- accessing the data element (24.x) at the storage location (L, A).

7. A method according to any one of claims 1 to 5, **characterised in that** the following steps are executed:
- determining whether an entry (32.x) assigned to the tag (T) is contained in the supplementary data (28) to be used,
- if this is the case, then accessing the data element (24.x) according to this entry (32.x),
- otherwise, searching for the entry (30.x) in the basic table (26) assigned to the tag (T) and accessing the data element (24.x) at the storage location (L, A) denoted in the entry (30.x) in the basic table (26).

8. A method according to any one of claims 1 to 7, **characterised in that** at least some entries (32.x) of the supplementary data (28) further denote additional information (X).

9. A method according to any one of claims 1 to 8, **characterised in that** the permanent memory (18) is a ROM, and/or **in that** the non-volatile, rewritable memory (20) is an EEPROM.

10. A computer program product which contains data for defining at least one basic table (26) and for defining supplementary data (28), the at least one basic table (26) and the supplementary data (28) being provided for use in a method according to any one of claims 1 to 9.

11. A computer program product according to claim 10, **characterised in that** the computer program product further comprises program commands, which cause a processor core (12) of a portable data carrier (10) to execute a method according to any one of claims 1 to 9.

12. A portable data carrier (10), in particular a smart card or chip module, which comprises a processor core (12), a permanent memory (18) and a non-volatile, rewritable memory (20), the permanent memory (18) comprising at least one basic table (26) with a plurality of entries (30.x), each of which is assigned to at least one tag (T) and denotes a storage location (L, A) of a data element (24.x), designated by this tag (T), in the non-volatile, rewritable memory (20), the non-volatile, rewritable memory (20) comprising supplementary data (28) with at least one entry (32.x) which is assigned to at least one tag (T) and which denotes information (L, A, X) about a data element (24.x) designated by this tag (T), **characterised in that** the data carrier (10) is set up to execute a method according to any one of claims 1 to 9.

## Revendications

1. Procédé pour accéder à un élément de données (24.x) sur un support de données portable (10) qui présente un noyau de processeur (12), une mémoire morte (18) et une mémoire réinscriptible non volatile (20), et dans lequel
- la mémoire morte (18) présente au moins un tableau de base (26) avec une pluralité d'enregistrements (30.x) dont chacun est attribué à au moins un indice (T) et indique un emplacement en mémoire (L, A) d'un élément de données (24.x) désigné par cet indice (T) dans la mémoire réinscriptible non volatile (20), et
- la mémoire réinscriptible non volatile (20) présente des données complémentaires (28) avec au moins un enregistrement (32.x) qui est attribué à au moins un indice (T) et indique des informations (L, A, X) concernant un élément de données (24.x) désigné par cet indice (T),
comprenant les étapes consistant à :
- recevoir un indice (T) de l'élément de données (24.x) auquel il convient d'accéder;
- accéder à l'élément de données (24.x) selon un enregistrement (32.x) attribué à l'indice (T) dans les données complémentaires (28) à utiliser, dans la mesure où il a été déterminé qu'il existe un tel enregistrement (32.x), et sinon selon un enregistrement (30.x) attribué à l'indice (T) dans le tableau de base (26).

2. Procédé selon la revendication 1, **caractérisé en ce que** le support de données portable (10) est configuré pour exécuter plusieurs programmes d'application (22.x), dans lequel un seul tableau de base (26) est prévu pour tous les programmes d'application (22.x), et en outre, pour au moins l'un des programmes d'application (22.x), au moins une zone (34.x) des données complémentaires (28), spécifique à ce programme d'application (22.x), est prévue.

3. Procédé selon la revendication 2, **caractérisé en ce que** les programmes d'application (22.x) accèdent à des éléments de données (24.x) du même type mais tout au plus partiellement identiques.

4. Procédé selon la revendication 2 ou 3, **caractérisé en ce que** le tableau de base (26) contient des préréglages pour l'un des programmes d'application (22.x), et **en ce que** pour chaque autre programme d'application (22.x), respectivement une zone (34.x) des données complémentaires (28) est prévue avec des enregistrements (32.x) pour des éléments de données (24.x) qui s'écartent de ces préréglages.

5. Procédé selon l'une quelconque des revendications 1 à 4, **caractérisé en ce que** les informations (L, A, X) stockées dans chaque enregistrement (32.x) des données complémentaires (28) concernant l'élément de données (24.x) désigné par l'indice (T) indiquent un emplacement en mémoire (L, A) dans la mémoire réinscriptible non volatile (20) pour l'élément de données (24.x).

6. Procédé selon la revendication 5, **caractérisé en ce que** les étapes suivantes sont exécutées:
- chercher dans le tableau de base (26) l'enregistrement (30.x) attribué à l'indice (T) ;
- tamponner l'emplacement en mémoire (L, A) indiqué dans cet enregistrement (30.x) ;
- si un enregistrement (32.x) attribué à l'indice (T) existe dans les données complémentaires (28) à utiliser, alors remplacer l'emplacement en mémoire (L, A) tamponné par l'emplacement en mémoire (L, A) indiqué dans cet enregistrement (32.x) ; et
- accéder à l'élément de données (24.x) à l'emplacement en mémoire (L, A).

7. Procédé selon l'une quelconque des revendications 1 à 5, **caractérisé en ce que** les étapes suivantes sont exécutées:
- déterminer si un enregistrement (32.x) attribué à l'indice (T) est contenu dans les données complémentaires (28) à utiliser ;
- si c'est le cas, alors accéder à l'élément de données (24.x) selon cet enregistrement (32.x) ;
- sinon, chercher dans le tableau de base (26) l'enregistrement (30.x) attribué à l'indice (T) et accéder à l'élément de données (24.x) à l'emplacement en mémoire (L, A) indiqué dans l'enregistrement (30.x) dans le tableau de base (26).

8. Procédé selon l'une quelconque des revendications 1 à 7, **caractérisé en ce qu'**au moins certains enregistrements (32.x) des données complémentaires (28) indiquent en outre des informations supplémentaires (X).

9. Procédé selon l'une quelconque des revendications 1 à 8, **caractérisé en ce que** la mémoire morte (18) est une ROM et/ou **en ce que** la mémoire réinscriptible non volatile (20) est une EEPROM.

10. Produit de programme informatique qui contient des données pour définir au moins un tableau de base (26) et pour définir des données complémentaires (28), dans lequel ledit au moins un tableau de base (26) et les données complémentaires (28) sont prévus pour une utilisation dans un procédé selon l'une quelconque des revendications 1 à 9.

11. Produit de programme informatique selon la revendication 10, **caractérisé en ce que** le produit de programme informatique présente en outre des instructions de programme qui amènent un noyau de processeur (12) d'un support de données portable (10) à exécuter un procédé selon l'une quelconque des revendications 1 à 9.

12. Support de données portable (10), en particulier carte à puce ou module à puce présentant un noyau de processeur (12), une mémoire morte (18) et une mémoire réinscriptible non volatile (20), dans lequel la mémoire morte (18) présente au moins un tableau de base (26) avec une pluralité d'enregistrements (30.x) dont chacun est attribué à au moins un indice (T) et indique un emplacement en mémoire (L, A) d'un élément de données (24.x) désigné par cet indice (T) dans la mémoire réinscriptible non volatile (20), et la mémoire réinscriptible non volatile (20) présente des données complémentaires (28) avec au moins un enregistrement (32.x) qui est attribué à au moins un indice (T) et qui indique des informations (L, A, X) concernant un élément de données (24.x) désigné par cet indice (T), **caractérisé en ce que** le support de données (10) est configuré pour exécuter un procédé selon l'une quelconque des revendications 1 à 9.
